# EUROPEAN PATENT SPECIFICATION

(11) **EP 2 159 146 B1**
(45) Date of publication and mention of the grant of the patent: **01.12.2010**
(21) Application number: 08015267.1
(22) Date of filing: 29.08.2008
(51) Int. Cl.: B62K 11/04, B60R 16/04, H01M 2/10

(54) **Motorcycle comprising a radiator and a battery**
Motorrad mit einem Kühler und einer Batterie
Motocyclette comportant un radiateur et une batterie

(43) Date of publication of application: 03.03.2010
(73) Proprietor: Yamaha Motor Research & Development Europe s.r.l., 20050 Gerno di Lesmo (MI) (IT)
(72) Inventor: Kinoshita, Takuya, Milano 20146 (MI) (IT); Ghezzi, Maurizio, Perego 23888 (LC) (IT); Saita, Alessandro, Paderno Dugnano 20037 (MI) (IT)
(74) Representative: Grünecker, Kinkeldey, Stockmair & Schwanhäusser Anwaltssozietät

(56) References cited:
- EP-A- 1 598 230
- JP-A- 8 127 377
- JP-A- 2008 080 986
- US-A1- 2008 006 463

## Description

The present invention relates to the field of motorcycles. In particular, the present invention relates to the layout of motorcycles. In more details, the present invention relates to the location, disposition and dimension of component parts of a motorcycle such as, for instance, the battery and the radiator. Still in more detail, the present invention relates to the way the performances of several component parts and/or elements of a motorcycle can be improved and optimized by conveniently locating and disposing said component parts.

It is well known that designing new motorcycles represents an important and difficult challenge. This is in particular due to the fact that the layout of a motorcycle influences not only the overall look and appearance of the motorcycle, but also its aerodynamic and performances. Accordingly, many efforts have been made in the past for the purpose of finding convenient locations and dimensions for several component parts such as, for instance, the battery, the radiator or cooling system, or the like. For instance, the battery of a motorcycle has to meet several requirements. Big batteries would guarantee reliability and good performances on the one hand; however, on the other hand, too big batteries would result in the motorcycle becoming cumbersome and big, thus negatively affecting the overall appearance of the motorcycle. Moreover, in the case of big batteries, it could become difficult to find enough space and a convenient location for both the batteries and other component parts. Moreover, when batteries are located close to heat generating component parts such as, for instance, the engine or the exhaust pipe, the batteries could get overheated and finally damaged. It also has to be considered that batteries, in spite of their non-negligible dimensions, have a weight which is normally less than that of other component parts with similar dimensions. Accordingly, the location of the battery in a motorcycle with respect to other component parts also influences the balancing of the motorcycle. Inadequate balancing could influence the traveling performance and also annoy the driver and/or passenger of the motorcycle. It also has to be noted that the air stream or air flow generated during traveling, in particular at high speeds, is used for cooling several motor parts or components such as, for instance, the radiator, the cylinder or even the exhaust pipes. A big battery located for instance in the front portion of the motorcycle would represent an obstacle to the air flow, resulting in these component parts or elements getting overheated. It is known that catalysts exploit their function (capturing the polluting components of the exhaust gases) only if their temperature is comprised between a predefined range (the activation temperature range is usually comprised between 550 and 650 degrees); a catalyst placed behind (in the traveling direction) a big or cumbersome battery would not experience the cooling effect arising during travel due to the resulting air stream or air flow. The same considerations as stated above with respect to catalysts also apply for instance to the cylinder of the motorcycle. It is in fact well-known that cylinders are cooled by means of both the cooling liquid flowing from the radiator and the air stream arising during travel. In the case of the radiator, difficulties are normally faced during design of the motorcycle due to the relevant dimensions of the radiator and the important function to be exploited by same. Large radiators would guarantee adequate cooling of the coolant fluid but would influence the overall layout of the motorcycle. The motorcycle would become too cumbersome and it would also be difficult to find an adequate location for other component parts. Moreover, the radiator would also represent an obstacle to the air flow arising during travel, so that other component parts of the motorcycle located behind the radiator could become overheated.

Accordingly, in an attempt to overcome as many as possible of the problems and/or drawbacks outlined above, several solutions relating in particular to the layout and design of many component parts of motorcycles have been suggested in recent years by the manufacturers of motorcycles. For instance, solutions have been proposed in the past such as placing a small battery behind the fuel tank and beneath the seat of the motorcycle. In this way, space is saved and can be used for other component parts which need to be located close to the engine and/or cylinder. Moreover, the balancing of the overall motorcycle is not negatively influenced by the battery. However, in spite of the above advantages offered by this solution, other problems and/or drawbacks arise. For instance, some of the disadvantages arising relate to the wiring of the motorcycle, in particular to the cables connecting the battery to other component parts which need to be supplied with electrical power; wiring may become troublesome and, therefore, expensive due to the increased distance between the battery and said component parts. Moreover, small batteries usually do not offer the same performances (electrical power supplied, reliability and duration) as offered by bigger batteries (due for instance to the reduced quantity of fluid contained in the battery). Accordingly, for some applications, larger batteries may be preferred and still need to be located in proximity of the engine and/or cylinder. Also in the case of the radiator and/or cooling system several solutions have been proposed in the past for overcoming the problems disclosed above. For instance, in some cases, it has been suggested to locate the radiator behind the engine and/or cylinder (still in the traveling direction); however, since the air flow toward the radiator is at least partially obstructed by said engine and/or cylinder, a ventilator has to be used for cooling the cooling fluid. According to other solutions, small radiators were placed in the front portion of the motorcycle, in particular before the engine. In this way, the engine can still experience the cooling effect produced by the air flow arising during travel; however, small radiators mean reduced quantity of cooling fluid, which means in turn reduced cooling performances.

A further solution relating to the structure disposition and location of a battery in a motorcycle is disclosed in, for example, Japanese Patent Application Laid Open Gazette No. 2001-71961. According to this solution, a battery is arranged beneath a seat. In particular , the battery is accommodated in an empty space defined by the seat and a receiving recess, which is formed by a rear fender covering an upper portion of a rear wheel.

However, since the battery is accommodated in the empty space beneath the seat, the heat generated from the battery is less likely to be dispersed to the outside and thus the temperature of the battery tends to increase. This has been one of reasons hindering the improvement of durability (life) of the battery.

Further examples can be found in JP 2008 080986 A, EP 1 598 230 A, JP 08 127377 A and US 2008/006463 A1.

Accordingly, in view of the above, it is an object of the present invention to provide a motorcycle which overcomes the problems stated above. In particular, it is an object of the present invention to provide adequate placement, location and dimensions for the battery of a motorcycle. In more detail, it is a further object of the present invention to provide adequate placement, location and dimensions of the battery of a motorcycle so as to not negatively influence the overall appearance of the motorcycle and still insuring good performances of the battery, as well as of other component parts of the motorcycle. It is also an object of the present invention to conveniently arrange the radiator and the battery of the motorcycle, along with other component parts of the motorcycle located in proximity of said battery and said radiator.

In general terms, the present invention is based on the consideration that the problems affecting the prior art motorcycles may be overcome by adequately arranging, designing and dimensioning some component parts of the motorcycle, in particular the battery. In particular, the battery which is normally perceived as an encumbering component part may be opportunely arranged, according to the present invention so as to allow quick mounting and maintenance operation as well as performance and reliability of the battery. A further consideration on which the present invention is based relates to the fact that both the battery and the radiator, if opportunely designed and dimensioned, may be placed in the front portion of the motorcycle (before the engine and/or cylinder), without representing an obstacle to the air flow so that component parts located behind said battery and radiator can be adequately cooled. Moreover, even the cooling of both the radiator and the battery is improved when same are placed before the engine or cylinder.

On the basis of the considerations as stated above, according to the present invention the problems affecting the prior art motorcycles are overcome or at least greatly reduced by the features defined in claim 1.

Preferred embodiments of the present invention are laid down in the dependent claims.

According to the present invention, the empty space that opens to the front of the vehicle is provided inside the front cover, and the battery is provided such that at least a part of the battery is disposed within the empty space. Moving air is introduced into the empty space during traveling. The moving air suppresses the increase of temperature caused by the heat generated from the battery, and as a result, the durability (life) of the battery can be improved.

Further advantages, objects and features as well as embodiments of the present invention are defined in the appended claims and will become more apparent with the following detailed description when taken with reference to the accompanying drawings, in which identical or corresponding parts are identified by the same reference numerals. In particular, in the drawings:
Fig. 1 relates to a left side view of a motorcycle according to a first embodiment of the present invention;
Fig. 2 relates to a front view of the motorcycle depicted in Figure 1
Fig. 3 relates to a top view of the motorcycle depicted in Figures 1 and 2;
Fig. 4 relates to a perspective view schematically illustrating the reciprocal disposition of the engine, the vehicle frame and the exhaust system in the motorcycle of Figures 1 to 3;
Fig 5 relates to a left side view schematically illustrating the reciprocal disposition of the engine and the exhaust system in the motorcycle of Figures 1 to 3;
Fig 6 relates to a front view schematically illustrating the reciprocal disposition of the engine and the exhaust system in the motorcycle of Figures 1 to 3;
Fig. 7 relates to a cross-section top view schematically illustrating the reciprocal disposition of battery and radiator according to the present invention;
Fig. 8 relates to a front view illustrating the reciprocal disposition of battery and radiator according to the present invention;
Fig. 9 relates to a right side view illustrating a secondary air supply system;

While the present invention is described with reference to the embodiments as illustrated in the following detailed description as well as in the drawings, it has to be appreciated that the following detailed description as well as the drawings are not intended to limit the scope of the present invention to the particular illustrative embodiments disclosed, but rather the described illustrative embodiments merely exemplify the various aspects to the present invention, the scope of which is defined by the appended claims.

The present invention is understood to be of particular advantage when applied to two-wheeled motorcycles, such as, for instance, motorbikes or the like. For this reason, examples will be given in the following, in which corresponding embodiments of the present invention are applied to motorcycles, in particular, to motorbikes. However, it has to be noted that the applications of the present invention are not limited to the case of motorcycles, in particular, to the case of motorbikes; on the contrary, the present invention may also be applied to other motorcycles, in particular, to three or even four-wheeled motorcycles such as, for instance, choppers, quads or the like.

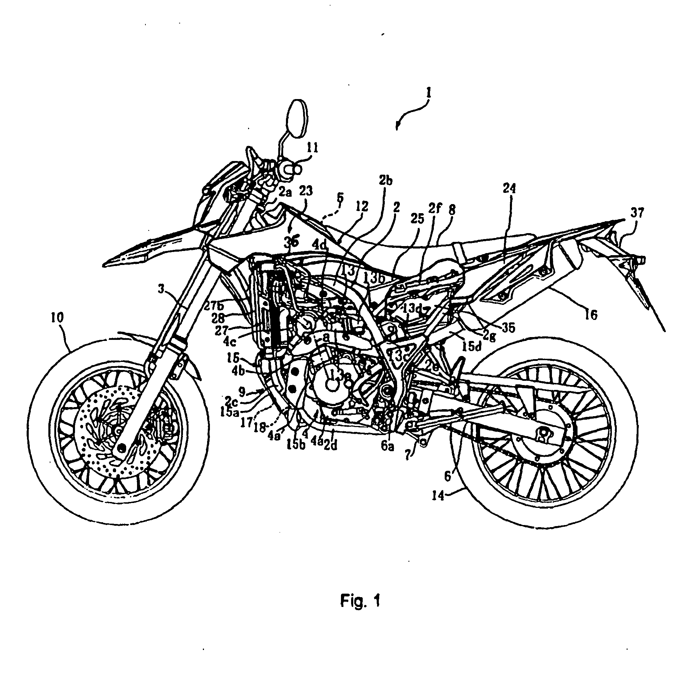

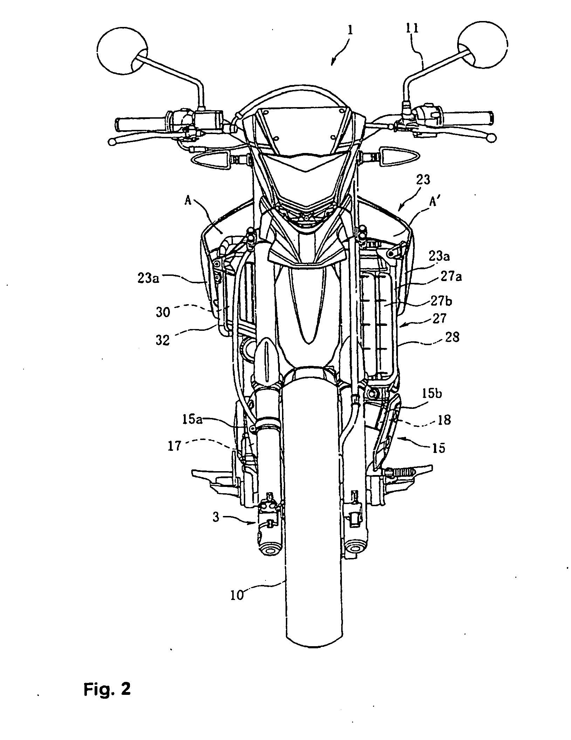

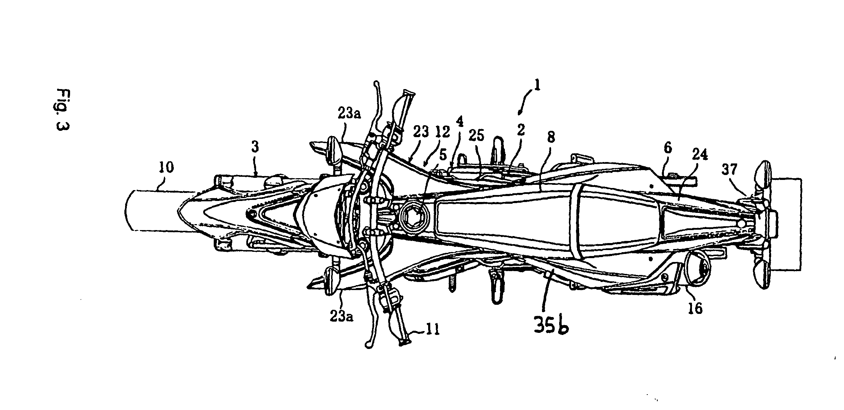

In the following, some details and features a motorcycle implementing the present invention will be described with reference to Figures 1 to 3. Hereinafter, it should be noted that the expressions "front," "back," "left," and "right" described herein are defined as the "front," "back," "let," and "right" from the view point of a rider sitting on the seat.

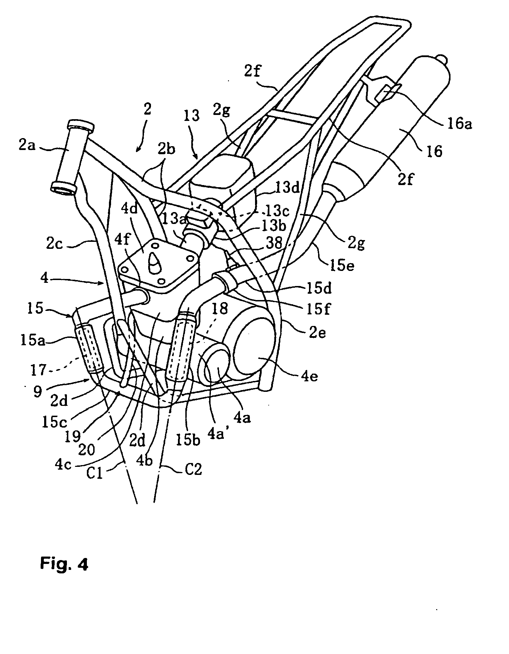

In the figures 1 to 3, reference numeral "1" identifies a equipped with an exhaust gas apparatus motorcycle according to a first embodiment of the present invention. The motorcycle 1 comprises a vehicle frame 2, a front fork 3, an engine 4, a fuel tank 5, a rear arm 6, a rear-wheel suspension system 7, a seat 8, an exhaust system 9, and a vehicle cover 12. The front fork 3 is supported by the head pipe 2a (see also Figure 4) to be steerable to the left and right. A front wheel 10 is supported by the lower end of the front fork 3, and a steering handle 11 is fixed to the upper end thereof.

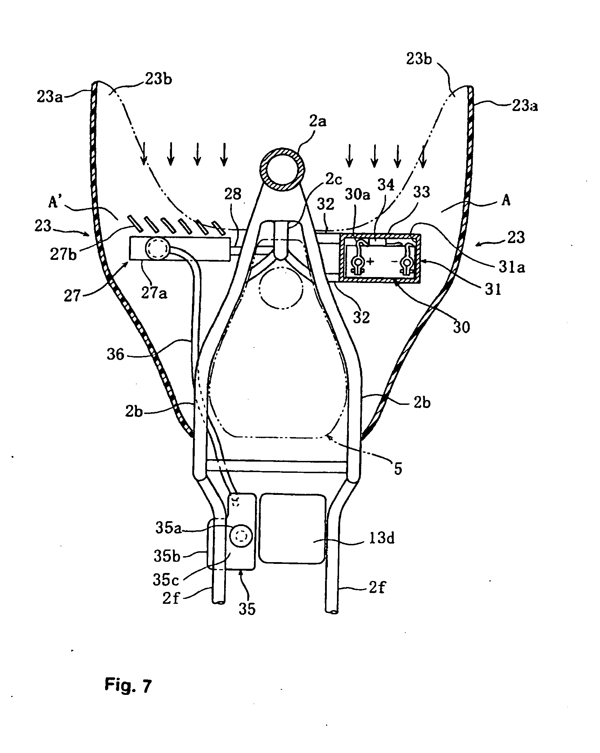

The fuel tank 5 is of an integrated type and is integrated by welding flanges formed on the peripheries of an upper tank and a lower tank. Moreover, a recovery tank 35 is provided between the left and right seat rails 2f. 2f and in the empty space defined on the left side of the air cleaner 13d. The recovery tank 35 is for storing the amount of cooling water expanded in radiator 27 described below when the temperature of cooling water increases, and for supplying the amount of cooling water contracted when the temperature thereof decreases. The recovery tank 35 is provided in a region surrounded by the left seat rail 2f, the left seat stay 2g, and the main frame 2b, and is formed such that the left side wall 35b (see also figure 7), thereof is protruded slightly outward to the left. With this structure, the required volume is maintained.

The rear arm 6 is supported by a pivot axis 6a, which is inserted through the lower end of the rear arm bracket 2e, such that the rear arm 6 is pivotable upward and downward, and a rear wheel 14 is supported at the rear end of the rear arm 6.

The seat 8 is provided such that it covers the upper surface of the rear part of the fuel tank 5, extends backward therefrom, and is removably mounted on the left and right seat rails 2f, 2f.

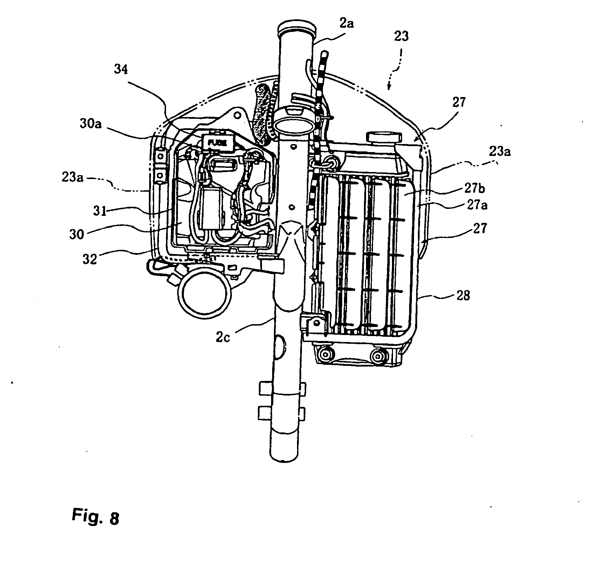

The motorcycle 1 comprises a vehicle cover 12 covering the main section of the vehicle (see also Figures 7 and 8). The vehicle cover 12 is composed of a front cover 23 covering the left and right side surfaces of the fuel tank 5 and the main frames 2b, 2b and the upper surface of the fuel tank 5; a rear cover 24 covers the left and right side surfaces of a rear portion of the seat 8 and the rear portion of the seat 8; a center cover 25 disposed between the rear cover 24 and the front cover 23 covers the left and right side portions of the front portion of the seat 8. Each cover 23 to 25 is sub-assembled to the vehicle in advance, and is attached to the vehicle by fastening the main parts with fastening member such as bolts connectors, screws or the like.

The front cover 23 covers the main frames 2b, 2b and the downtube 2c from the sides and creates a space in the width direction of the vehicle such that empty spaces A, A' that open to the front are formed between the side surfaces of the main frames 2b, 2b and the downtube 2c. Moreover, the front cover 23 has forward extension portions 23a, 23a which extend diagonally outward and forward to be provided on left and right sides of the front fork 3. Thus, the empty spaces A, A' widen as they approach the front of the vehicle.

The forward extension portions 23a serve as wind deflectors for introducing moving air into the empty spaces A, A'. Thus, moving air is introduced into the empty spaces A, A' through openings 23b, 23b as the motorcycle travels.

In figures 1 to 3, some portions common to usual motorcycles have been omitted or have not been identified by reference numerals for reasons of clarity; the features not depicted or not identified by reference numerals may relate for instance to rear and front direction indicators, rear and front fenders, the transmission chain or the like. Even if not essential to the present invention, these omitted features and all the equivalents have to be considered as comprised in the motorcycle depicted in Figures 1 to 3

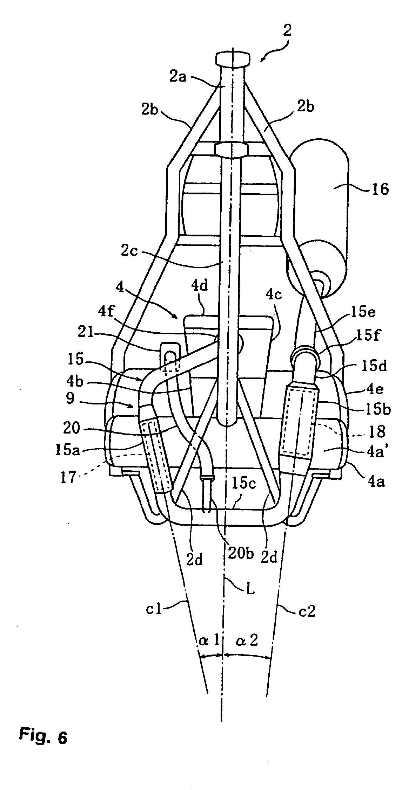

In the following, with reference to Figures 4 to 6, further details of an exhaust gas purifying apparatus or system adapted to be implemented in a motorcycle according to the present invention will be described, along with further features relating to the frame of said motorcycle; in Figures 4 to 6, those features already disclosed above with reference to Figures 1 to 3 are identified by the same reference numerals.

As depicted in Figures 4 to 6, left and right main frames tubes 2b, 2b are connected to an upper portion of a head pipe 2a which is provided at the front end of the vehicle frame 2. The left and right main frames 2b, 2b extend diagonally backward and downward while spreading outward from the upper portion in the width direction of the vehicle. A downtube 2c is connected to a lower portion of the head pipe 2a, and left and right undertubes 2d, 2d are connected to the lower end of the downtube 2c. The left and right undertubes 2d, 2d extend downward and further backward while spreading outward, and are connected to the lower ends of rear arm brackets 2e, 2e of the main frames tubes 2b, 2b. Moreover, left and right seat rails 2f, 2f are connected to the middle parts of the main frames tubes 2b, 2b, and the seat rails extend substantially horizontally backward. The middle parts of the left and right seat rails 2f, 2f are connected to the rear arm brackets 2e via seat stays 2g. The seat stays 2g have a function of enhancing the load bearing rigidity of the seat rails 2f.

The engine 4 is provided within an empty space (cradle) surrounded by the main frames tubes 2b of the vehicle frame 2, the rear arm brackets 2e, the downtube 2c and the undertubes 2d, and is removably fixed to these frame members via suspension bolts.

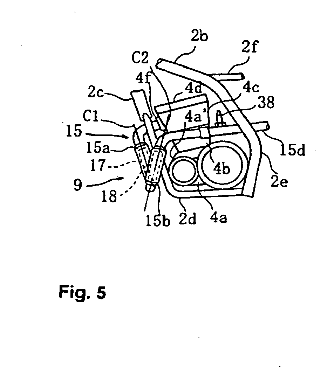

The engine 4 may be a water-cooling, four-cycle single cylinder engine. However, according to the needs and/or circumstances, other engines are possible such as, for instance, multiple cylinder engines. A cylinder body 4b, a cylinder head 4c, and a head cover 4d are stacked and coupled to an upper surface of the front portion of a crankcase 4a which is integrated with a transmission case 4e. Here, the cylinder body 4b, the cylinder head 4c and the head cover 4d are provided in a forward tilting state such that the upper portion of a cylinder axis a is tilted toward the front. On the other hand, as depicted in Figure 5, the crankcase 4a comprises a front wall 4a' with flat left and right side portions. The front wall 4a' has been depicted in Figure 5 only for the sake of clarity; accordingly, only the flat left portion thereof can be identified in Figure 5. It has, however, to be considered that the front wall 4a' of the crankcase 4a also comprises a right flat portion opposite to said flat left portion in the transverse direction of the motorcycle. As apparent from Figure 5, said left and right flat portions of said front wall 4a' are tilted toward the back, i.e. with the upper portions thereof being tilted toward the back. Still as apparent from Figure 5, the central axis C2 of the catalyst 18 (and the receiving portion 15b), and said flat portions of the front wall 4a' are tilted at predefined angles with respect to the vertical; according to a preferred embodiment of the present invention, said central axis C2 and said flat and right portions are tilted at the same angle, with said central axis C2 being parallel to said left and right flat portions.

When looking at Figures 4 to 6, with reference to Figures 1 to 3, it may be appreciated that the fuel tank 5 is disposed such that, in a plain view, it is positioned between the left and right main frames 2b, 2b.

A suction system 13 is connected to the back wall of the cylinder head 4c of the engine 4. The suction system 13 has a throttle body 13b which is connected to a suction port that opens on the back wall via a joint member 13a, and an air cleaner 13d connected to the throttle body 13b via a suction duct 13c. The air cleaner 13d is disposed such that it is positioned beneath the seat 8 and between the left and right seat rails 2f, 2f and is deviated to the right.

The exhaust gas system 9 comprises a main exhaust pipe 15, which is connected to an exhaust port 4f that opens on the front wall of the cylinder head 4c, and a silencer (muffler) 16, which is connected to the rear end portion of the main exhaust pipe 15.

The main exhaust pipe 15 extends diagonally forward from the cylinder head 4c toward one side (right side) of the motorcycle in the width direction and extends downward, passes in front of the engine to the other side (left side), and further extends upward and then backward.

A first catalyst 17 is received in a first portion 15a of the main pipe 15 extending downward, and a second catalyst 18 is received in a second portion 15b of said main pipe 15 extending upwards.

The first portion 15a and the second portion 15b are provided in a tilted state where, when viewed from the front of the vehicle, the lower portions thereof are tilted inward in the width direction of the vehicle. In other words, an axis line c1 of the first extension portion 15a has a tilt angle α1 with respect to the central line L of the vehicle, and an axis line c2 of the second extension portion 15b has a tilt angle α2 with respect to the central line L of the vehicle, so that the axis lines c1, c2 form a V-shape.

Moreover, when viewed from the right of the vehicle, the first portion 15a is provided in a forward tilting state such that the upper portion thereof is tilted toward the front of the vehicle, and the second portion 15b is provided in a backward tilting state such that the upper portion thereof is tilted toward the rear of the vehicle. In other words, the axis line c1 of the first portion 15a is parallel to the forward tilting cylinder axis line a, and the axis line c2 of the second extension portion 15b is parallel to the backward tilting front wall 4a' of the crankcase 4a so that the axis lines c1, c2 form a V-shape as a whole.

Moreover, a backward extension portion 15d leading from the second portion 15b extends backward on the inside of the left main frame 2b and the left seat stay 2g, and raises upward near the seat stay 2g. The silencer 16 is connected to the upper end portion of such raised portion 15e. The silencer 16b is fixed to the left seat rail 2f via a bracket 16a.

The backward extension portion 15d is divided into front and rear portions along the way, which are removably connected via a joint member 15f. Furthermore, an oxygen sensor 38 is mounted near the joint member 15f of the backward extension portion 15d. The oxygen sensor 38 is disposed such that, when viewed from the side of the vehicle, it extends toward the front more than the left main frame tube 2b and toward the back more than the cylinder body 4b. In other words, the oxygen sensor 38 is provided such that it is not interfered by the main frame tubes 2b during maintenance from the sides of the vehicle. In addition, the oxygen sensor 38 is disposed at a location that is not readily exposed to the heat from cylinder body 4b and cylinder head 4c.

The exhaust gas system 15 further comprises a secondary air supply system 19. This secondary air supply system 19 will be described in the following with reference to Figures 4 to 6, and 9.

The secondary air supply system 19 comprises a secondary air supply tube 20 connecting the exhaust pipe 15 and the air cleaner 13b, and an on-off valve (lead valve) 21 that opens and closes the secondary air supply tube 20.

The secondary air supply tube 20 extends in a front-back direction, and passes through one side (right side) of the vehicle in the width direction above the upper wall 4g of the crankcase 4a and on the right side of the cylinder body 4b, therefore on the opposite side of the backward extension portion 15d of the exhaust pipe 15. An upstream end portion 20a of the secondary air supply tube 20 is connected to the air cleaner 13d, and a downstream end portion 20b thereof is connected, from above, to an engine-front extension portion 15c, which is located between the first and second portions 15a, 15b of the exhaust pipe 15.

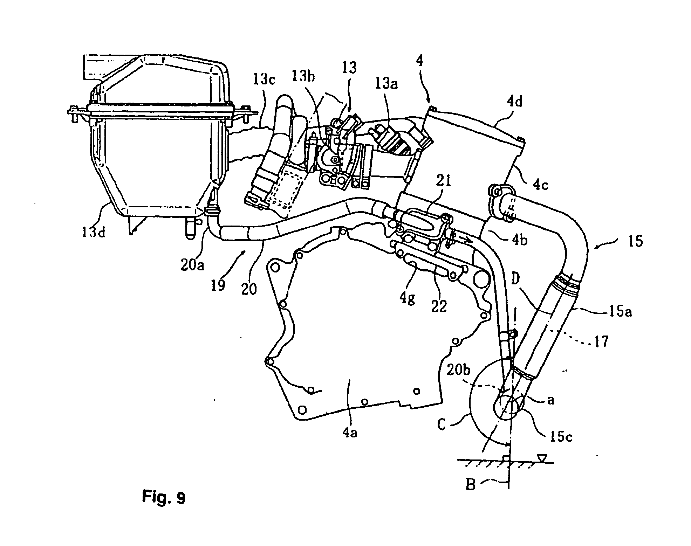

In particular, the downstream end portion 20b of the pipe 20 is connected to the engine-front extension portion 15c of the main pipe 15 at a position located in the rear half c of said engine-front extension portion 15c facing toward the engine. As apparent from Figure 9, the engine-front extension portion 15c may be regarded as being divided by a vertical plane B receiving the center axis a' of said engine-front extension portion 15c into a first semicircular half C (depicted in an enlarged view in Figure 9) facing the engine or crankcase and a second semicircular half facing toward the front. According to the embodiment depicted in Figure 9, the secondary air pipe or tube 20 or, in particular, the downstream end portion 20b thereof is connected to the engine-front extension portion 15c at a position located in the first semicircular half thereof, namely in the semicircular half thereof facing toward the rear of the motorcycle, in particular, facing towards the crankcase and the engine.

The on-off valve 21 is fixed at a portion close to the cylinder and above the upper wall 4g of the crankcase 4a via a bracket 22. The on-off valve 21 serves as a check valve which allows the air to flow only from the air cleaner 13d side to the exhaust pipe 15 side and prevents an opposite flow. Therefore, air is introduced into the exhaust pipe 15 due to negative pressure caused by pulsation of exhaust gas, while the exhaust gas within the exhaust pipe 15 is prevented from flowing out.

As stated above and as apparent from Figures 4 to 6, a first catalyst 17 is received in main exhaust gas pipe 15 of an exhaust system 9 within a first receiving portion 15a located in front of the engine 4 and to the right of the motorcycle in the width direction, and a second catalyst 18 is received within a second receiving portion 15b located in front of the engine 4 and to the left. As a result, the first and second catalysts 17, 18 are promptly activated by the heat from the engine when the engine is started. In addition, since a secondary air supply tube 20 is connected to the front extension portion 15c of the exhaust pipe 15 located in front of the engine and between the receiving portions 15a, 15b in which the first and second catalysts 17, 18 are disposed, purification of HC and CO by the second catalyst 18 can be accelerated. As a result, purification efficiency of exhaust gas in an extended engine operating region included during the starting of the engine can be improved.

Further, since the downstream end 20b of the secondary air supply tube 20 is connected to the engine-front extension portion 15c of the exhaust pipe 15 at a position located in the semicircular portion C thereof, which is closer to the engine than the vertical plane B passing through the center of axis a of the engine front extension portion 15c, exhaust pipe connecting portion 20b of the secondary air supply tube 20 is less likely to be hit by stones thrown up by the front wheel 10.

Further, since the first catalyst 17 is disposed within the first receiving portion 15a extending downward of the exhaust pipe 15 and the second catalyst 18 is disposed within the second receiving portion 15b extending upward, thus the first and second catalysts 17, 18 are vertically disposed, allocation space for the catalysts (length of exhaust pipe) is more readily secured, as compared to the case where two exhaust pipes are arranged in series in the portion extending in the horizontal direction.

Further, since the first receiving portion 15a is tilted forward and the second receiving portion 15b is tilted backward, the main exhaust pipe is longer than in the case where it is extended directly downwards, and allocation gas space for the catalysts is more readily secured.

In addition, since the first receiving portion 15a and the second receiving portion 15b are provided such that they tilt laterally outward, allocation space for the catalysts (length of exhaust pipe) is even more readily secured. In this case the tilting angle, as the vehicle is being titled during cornering, can be increased.

Further, since the backward extension portion 15d of the exhaust pipe 15 is disposed such that it passes through the left side of the vehicle in the width direction, and the secondary air supply tube 20 is disposed such that it passes through the right side of the vehicle in the width direction, thus the opposite side of the exhaust pipe, the secondary air supply tube 20 is not exposed to the heat from the exhaust pipe 15.

Further, since the middle part of the secondary air supply tube 20 is fixed to the upper wall 4g of the crankcase 4a, damage of the secondary air supply tube 20 caused by, for example, hitting the side of the cylinder body 4b due to the vibration generated by the pulsation of the secondary air can be prevented. Moreover, since it also serves a dual purpose of fixing the check valve 21 located along the secondary air supply tube 20 and as a steady brace for the secondary air supply tube 20, a simple structure is achieved.

In the following, some additional features of the present invention will be described with reference to Figures 7 and 8; as usual, features and/or component parts already described above with reference to other features are identified in figures 7 and 8 by the same reference numerals.

As apparent from figures 7 and 8, a radiator 27 is provided on the side (left side) of the downtube 2c in the width direction of the vehicle. The radiator 27 is mounted on the downtube 2c by means of a bracket 28 such that it is disposed on the left side of the downtube 2c. An upper portion 27a of the radiator 27 is located within the left empty space A'. In Figures 7 and 8 reference numeral "27b" identifies a louver, which is provided on the front surface of the radiator 27 (the surface facing toward the front of the motorcycle) and prevents mud or the like from being attached to the radiator 27. The louver 27b is structured such that it does not inhibit the introduction of the moving air into the radiator 27.

Moreover, the radiator (27), which is located on the left side of the vehicle in the width direction, and the recovery tank 35, which is provided on the same left side, are communicatively connected by a recovery hose or pipe 36, which is provided to extend in the front-back direction on the left side of the vehicle in the width direction.

Furthermore, a battery 30 is provided in a battery case 31 within the right empty space A. The battery case 31 is in a box shape and has an opening 31 a that opens to the front. The battery case 31 is removable with respect to the bracket 32 fixed to the downtube 2c or the main frame 2b.

Moreover, a cover plate 33 is removably mounted on the opening 31 a. The cover plate 33 serves as a protection wall for preventing stones or the like from hitting the battery 30. It has, however, to be noted that according to the needs and/or circumstances, instead of simple plates, a louver, a mesh plate or a perforated plate for promoting the introduction of the traveling wind into the battery case 31 can be used as a protection wall. In addition or alternatively to the cover plate 33, a further protection plate (not depicted in the drawings) supported either by the vehicle frame or by the vehicle cover, can be employed as the protection wall for preventing stones or the like from hitting the battery 30.

Still with reference to Figures 7 and 8, it can be appreciated that a power line 30a connected to the battery 30 and a fuse box 34 provided along the power line 30a and serving as an electric part or equipment are provided between the battery 30 and the cover plate 33 within the battery case 31.

The battery 30 can be mounted on the bracket 32 in a sub-assembled state where the power line 30a, the fuse box 34 and the like are being connected and disposed within the battery case 31.

As depicted in Figures 7 and 8 and as anticipated above, the front cover 23 constituting the front portion of the vehicle cover 12 covers at least partially the downtube 2c, the main frame 2b and thus the fuel tank 5 so as to create a space in the width direction of the vehicle so that the empty space A that opens to the front is formed. Therefore, moving air is introduced into the empty space A while traveling. Since the battery 30 is provided within the empty space A, the battery 30 is cooled by the moving air, and the increase in temperature caused by the heat generated from the battery 30 can be suppressed. As a result, the durability (life) of the battery 30 can be improved.

Moreover, since the cover plate 33 serving as a protection wall is provided on the front surface of the battery 30, stones or the like can be prevented from hitting the battery 30. This can also improve the durability and life of the battery.

In this case, since the cover plate 33, which opens and closes the opening 31 a of the battery case 31, is used as a protection wall, the battery 30 can be protected from stepping stones or the like with the simple structure.

Moreover, the battery 30, the fuse box 34 and the like which are sub-assembled within the battery case 31 is removable with respect to the bracket 32. Therefore, the workability when the battery 30 is disposed within the empty space A can be improved.

Moreover, an empty space A' is also formed on the left side of the downtube 2c; the radiator 27 is provided on the left side of the motorcycle, and an upper portion 27a of the radiator 27 is received within the empty space A'. Therefore, when the relatively heavy battery 30 is provided within the right empty space A, left and right weights can be well balanced while improving the cooling performance of the radiator 27.

With the radiator 27 being located on the left side of the motorcycle in the width direction, the recovery tank 35 may be located as depicted in Figures 7 and 8 beneath the seat 8 and on the left side of the air cleaner 13d; accordingly, the recovery hose 36, connects the recovery tank 35 and the radiator 27, may be provided as depicted in Figures 7 and 8 so as to extend along the left side of the motorcycle in the width direction. Therefore, the piping configuration can be simplified while disposing the recovery tank 35 away from the radiator 27.

Moreover, the recovery tank 35 and the air cleaner 13d are located in the region surrounded by the seat rail 2f and the seat stay 2g, thus partially beneath and partially in front of the seat (8). Therefore, thickness of an upper portion of the rear fender 37 (see Figure 1) provided over the rear wheel 14 can be reduced, and freedom in design, for example simple design of the portion over the rear wheel, can be enhanced.

Moreover, the battery 30 is provided within the right empty space A, and the exhaust pipe 15 extends backward through the left side of the vehicle in the width direction. In other words, since the exhaust pipe 15 is provided on the opposite side of the battery 30, it is possible to prevent the heat of the exhaust pipe 15 from having adverse effects on the battery 30. As a result, the cooling performance of the battery can be maintained and the durability of the battery can be increased.

Furthermore, since the battery 30 is provided inward of the front cover 23, it is not necessary to dispose the battery beneath the seat 8. Thus, even when a rear portion of the exhaust pipe 15 is raised upward beneath the seat 8, the battery is not exposed to the heat of the exhaust pipe. As a result, for example, the so-called up-muffler structure can be employed without any problem, and a degree of freedom of the exhaust pipe configuration can be increased.

It has to be noted that, although in the embodiment depicted, the battery case 31 and the battery 30 are provided in the right empty space A, the battery case 31 and the battery 30 can also be provided in the left empty space A' without departing from the scope of the present invention as defined in the claims.

Moreover, in the embodiment described the entire battery case 31 and battery 30 are provided in the empty space A. However, according to the present invention, it is adequate that at least parts of the battery case and the battery are provided within the empty space A. Even with such structure, the cooling effect by the traveling wind can be obtained.

It arises therefore from the above description that the present invention allows the drawbacks and all problems affecting the prior art solutions relating to the layout and reciprocal disposition of the battery and/or the radiator in a motorcycle to be overcome or at least strongly reduced or minimized. In particular, it has been demonstrated with the help of the above disclosure that the present invention offers evident advantages in terms of improved reliability, efficiency and performance of the battery of a motorcycle. It has been, in fact, demonstrated that the particular location of the battery according to the present invention allows to avoid overheating of the battery since no risk is run for the battery to get overheated by the exhaust gas pipe. Moreover, the battery is adequately protected by the cover of the motorcycle. Furthermore, since the battery is located in a case which opens toward the front, mounting and maintenance operations are simplified. Finally, the present solution is quite convenient in terms of space being saved so that no space is unduly lost but the space usually occupied by the battery can be used for conveniently locating other component parts and/or accessories of the motorcycle.

While the present invention has been described with reference to the particular embodiments depicted in the drawings, it has to be understood that the present invention is not limited to the particular embodiments described, but rather that various amendments may be introduced into the embodiment described without departing from the scope of the present invention, which is defined by the appended claims.

For instance, it will appear clearly to those skilled in the art that several kinds of batteries may be implemented in the layout according to the present invention. Moreover, although in the above disclosure the battery and the radiator have been depicted as being located on the right and left side of the motorcycle, respectively, other embodiments fall within the scope of the present invention as defined in the claims according to which, for instance, the battery and the radiator are located on the left and right sides of a motorcycle, respectively.

## Claims

1. A motorcycle (1) comprising:
a main frame (2) and;
a battery (30) supported by said main frame (2);
a cover (12) provided to cover at least a portion of said main frame (2);
wherein said cover (12) comprises a front cover (23) provided so as to define an empty space (A) opening toward the front of said motorcycle, said empty space (A) being formed on one side of the motorcycle; and
a further empty space (A') opening toward the front of said motorcycle being formed by said front cover (23) on the opposite side of said motorcycle with respect to said empty space (A);
at least a part of the battery (30) being located in said empty space (A) being formed on the one side of the motorcycle;
**characterized in that**
at least an upper portion (27a) of a radiator (27) is received in said further empty space (A') on the opposite side of said motorcycle with respect to said empty space (A).

2. A motorcycle as claimed in Claim 1, further comprising a protection wall (33) provided in front of the battery (30).

3. A motorcycle as claimed in Claim 2, wherein a battery case (31), which accommodates the battery (30), is provided, said battery case (31) being at least partially received within said empty space (A), and wherein
said protection wall (33) comprises a cover plate (33) which is provided to allow a front opening (31a) of said battery case (31) to open and close.

4. A motorcycle as claimed in claim 3, wherein the entire battery (30) or battery case (31) is received in said empty space (A).

5. A motorcycle as claimed in Claim 3, wherein an electric equipment is located in said battery case (31).

6. A motorcycle as claimed in one of Claims 1 to 5, further comprising:
a fuel tank (5) supported by said main frame (2);
a seat (8) located behind said fuel tank (5); and
a recovery tank (35) provided beneath said seat (8) and tilted toward one side of said motorcycle in a width direction,
wherein a recovery hose (36) connecting said radiator (27) and said recovery tank (35) extends in a front-back direction on the other side of said motorcycle in the width direction.

7. A motorcycle as claimed in one of claims 1 to 6, further comprising:
an engine (4) supported by said main frame (2); and
an exhaust gas system (9) connected to the engine (4);
wherein said battery (30) is at least partially received in said empty space (A) formed on the one side of said motorcycle between said main frame (2) and said front cover (23), and wherein a main exhaust gas pipe (15) of said exhaust gas system (9) is at least partially located on the opposite side of said main frame (2) and extends backward of said motorcycle (1).

8. A motorcycle as claimed in Claim 7, wherein said seat (8) is located partially behind and partially above said engine (4), wherein said main exhaust gas pipe (15) rises from beneath said seat (8), and a silencer (16) is connected to an upper end of said main exhaust pipe (15).

## Patentansprüche

1. Motorrad (1), das umfasst:
einen Hauptrahmen (2) und
eine Batterie (30), die von dem Hauptrahmen (2) getragen wird;
eine Abdeckung (12), die vorhanden ist, um wenigstens einen Abschnitt des Hauptrahmens (2) abzudecken;
wobei die Abdeckung (12) eine vordere Abdeckung (23) umfasst, die so vorhanden ist, dass sie einen leeren Raum (A) bildet, der sich zu der Vorderseite des Motorrades hin öffnet, und der leere Raum (A) an einer Seite des Motorrades ausgebildet ist; und
ein weiterer leerer Raum (A'), der sich zur Vorderseite des Motorrades hin öffnet, durch die vordere Abdeckung (23) an der in Bezug auf den leeren Raum (A) gegenüberliegenden Seite des Motorrades gebildet wird;
wenigstens ein Teil der Batterie (30), der sich in dem leeren Raum (A) befindet, an der einen Seite des Motorrades ausgebildet ist;
**dadurch gekennzeichnet, dass**
wenigstens ein oberer Abschnitt (27a) eines Kühlers (27) in dem weiteren leeren Raum (A') an der in Bezug auf den leeren Raum (A) gegenüberliegenden Seite des Motorrades aufgenommen ist.

2. Motorrad nach Anspruch 1, das des Weiteren eine Schutzwand (33) umfasst, die vor der Batterie (30) vorhanden ist.

3. Motorrad nach Anspruch 2, wobei ein Batteriegehäuse (31), das die Batterie (30) aufnimmt, vorhanden ist und das Batteriegehäuse (31) wenigstens teilweise in dem leeren Raum (A) aufgenommen ist, und wobei
die Schutzwand (33) eine Abdeckplatte (33) umfasst, die vorhanden ist, um zuzulassen, dass sich eine vordere Öffnung (31 a) des Batteriegehäuses (31) öffnet und schließt.

4. Motorrad nach Anspruch 3, wobei die gesamte Batterie (30) oder das Batteriegehäuse (31) in dem leeren Raum (A) aufgenommen ist.

5. Motorrad nach Anspruch 3, wobei sich eine elektrische Anlage in dem Batteriegehäuse (31) befindet.

6. Motorrad nach einem der Ansprüche 1 bis 5, das des Weiteren umfasst:
einen Kraftstoffbehälter (5), der von dem Hauptrahmen (2) getragen wird;
einen Sitz (8), der sich hinter dem Kraftstofftank (5) befindet; und
einen Ausgleichsbehälter (35), der sich unterhalb des Sitzes (8) befindet und in einer Breitenrichtung zu einer Seite des Motorrades hin geneigt ist,
wobei ein Ausgleichschlauch (36), der den Kühler (27) und den Ausgleichsbehälter (35) verbindet, in einer Vorn-Hinten-Richtung an der anderen Seite des Motorrades in der Breitenrichtung verläuft.

7. Motorrad nach einem der Ansprüche 1 bis 6, das des Weiteren umfasst:
einen Motor (4), der von dem Hauptrahmen (2) getragen wird; und
ein Abgassystem (9), das mit dem Motor (4) verbunden ist;
wobei die Batterie (30) wenigstens teilweise in dem leeren Raum (A) aufgenommen ist, der an der einen Seite des Motorrades zwischen dem Hauptrahmen (2) und der vorderen Abdeckung (23) ausgebildet ist, und sich ein Haupt-Abgasrohr (15) des Abgassystems (9) wenigstens teilweise an der gegenüberliegenden Seite des Hauptrahmens (2) befindet und zur Hinterseite des Motorrades (1) hin verläuft.

8. Motorrad nach Anspruch 7, wobei sich der Sitz (8) teilweise hinter und teilweise oberhalb des Motors (4) befindet, das Haupt-Abgasrohr (15) von unterhalb des Sitzes (8) nach oben steigt und ein Schalldämpfer (16) mit einem oberen Ende des Haupt-Abgasrohrs (15) verbunden ist.

## Revendications

1. Motocyclette (1) comprenant :
un châssis principal (2) ;
une batterie (30) supportée par ledit châssis principal (2) ;
un capot (12) fourni pour recouvrir au moins une partie dudit châssis principal (2) ;
dans laquelle ledit capot (12) comprend un capot avant (23) destiné à définir un espace vide (A) s'ouvrant vers l'avant de ladite motocyclette, ledit espace vide (A) étant formé sur un côté de la motocyclette ; et
un autre espace vide (A') s'ouvrant vers l'avant de ladite motocyclette étant formé par ledit capot avant (23) sur le côté opposé de ladite motocyclette par rapport au dit espace vide (A) ;
au moins une partie de la batterie (30) étant située dans ledit espace vide (A) sur ledit un côté de la motocyclette ;
**caractérisée en ce que**
au moins une partie supérieure (27a) d'un radiateur (27) est reçue dans ledit autre espace vide (A') sur le côté opposé de ladite motocyclette par rapport au dit espace vide (A).

2. Motocyclette selon la revendication 1, comprenant en outre une paroi de protection (33) fournie à l'avant de la batterie (30).

3. Motocyclette selon la revendication 2, dans laquelle il est fourni un boîtier de batterie (31), qui accueille la batterie (30), ledit boîtier de batterie (31) étant au moins partiellement reçu à l'intérieur dudit espace vide (A), et dans laquelle ladite paroi de protection (33) comprend une plaque de capot (33) qui est fournie pour permettre l'ouverture et la fermeture d'un orifice avant (31a) dudit boîtier de batterie (31).

4. Motocyclette selon la revendication 3, dans laquelle l'ensemble de la batterie (30) ou du boîtier de batterie (31) est reçu à l'intérieur dudit espace vide (A).

5. Motocyclette selon la revendication 3, dans laquelle un équipement électrique est situé dans ledit boîtier de batterie (31).

6. Motocyclette selon l'une des revendications 1 à 5, comprenant en outre :
un réservoir de carburant (5) supporté par ledit châssis principal (2) ;
un siège (8) situé derrière ledit réservoir de carburant (5) ; et
un réservoir de récupération (35) fourni au-dessous dudit siège (8) et incliné vers un côté de ladite motocyclette dans une direction de largeur,
dans laquelle un flexible de récupération (36) connectant ledit radiateur (27) et ledit réservoir de récupération (35) s'étend dans une direction de l'avant à l'arrière sur l'autre côté de ladite motocyclette dans la direction de largeur.

7. Motocyclette selon l'une des revendications 1 à 6, comprenant en outre :
un moteur (4) supporté par ledit châssis principal (2) ; et
un système de gaz d'échappement (9) connecté au moteur (4) ;
dans laquelle ladite batterie (30) est au moins partiellement reçue dans ledit espace vide (A) formé sur ledit un côté de ladite motocyclette entre ledit châssis principal (2) et ledit capot avant (23), et dans laquelle un tuyau de gaz d'échappement principal (15) dudit système de gaz d'échappement (9) est au moins partiellement situé sur le côté opposé dudit châssis principal (2) et s'étend vers l'arrière de ladite motocyclette (1).

8. Motocyclette selon la revendication 7, dans laquelle ledit siège (8) est situé partiellement derrière et partiellement au-dessus dudit moteur (4), dans laquelle ledit tuyau de gaz d'échappement principal (15) monte du dessous dudit siège (8), et un silencieux (16) est connecté à une extrémité supérieure dudit tuyau d'échappement principal (15).
